**Europäisches Patentamt**

(19) **European Patent Office**

**Office européen des brevets**

(11) Numéro de publication: **0 223 684
B1**

(12) **FASCICULE DE BREVET EUROPEEN**

(45) Date de publication du fascicule du brevet:
**19.07.89**

(51) Int. Cl.⁴: **F02C 9/26**

(21) Numéro de dépôt: **86402416.1**

(22) Date de dépôt: **29.10.86**

(54) Système de commande électrique du circuit de carburant d'un moteur à turbine.

(30) Priorité: **30.10.85 FR 8516099**

(43) Date de publication de la demande:
**27.05.87 Bulletin 87/22**

(45) Mention de la délivrance du brevet:
**19.07.89 Bulletin 89/29**

(84) Etats contractants désignés:
**DE FR GB IT**

(56) Documents cités:
**CH-A- 301 144
FR-A- 1 142 235
FR-A- 2 180 483
GB-A- 787 795
US-A- 3 086 581
US-A- 4 016 716**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris(FR)**

(72) Inventeur: **Gérard, Pierre Marcel Henri, 3, rue Jules Verne, F-94400 Villecresnes(FR)**
Inventeur: **Geyer, Pierre Marie, 32, rue des Castors, F-77000 Melun(FR)**
Inventeur: **Parisel, Christian André Fernand, 13, Place Van Gogh, F-77380 Combs La Ville(FR)**

(74) Mandataire: **Moinat, François, S.N.E.C.M.A. Service des Brevets Boîte Postale 81, F-91003 Evry Cédex(FR)**

ACTORUM AG

## Description

L'invention concerne un système de commande électrique du circuit de carburant d'un moteur à turbine, ledit circuit comportant en série une pompe basse pression et une pompe haute pression, un doseur de débit, un clapet d'alimentation des injecteurs et, en parallèle avec le doseur de débit, un détecteur de différence de pression entre l'entrée et la sortie du doseur, commandant une soupape régulatrice montée à la sortie de la pompe haute pression pour dériver le carburant qui en sort vers l'entrée de ladite pompe.

Les normes militaires font obligation aux motoristes d'installer sur le circuit d'alimentation en carburant des moteurs à réaction un clapet d'arrêt, commandé mécaniquement par la manette pilote qui interrompt l'alimentation des injecteurs de la chambre de combustion ou par une manette auxiliaire, si une inversion de poussée est commandée.

Cette norme est dépassée par suite de l'avènement des régulations électroniques "Pleine Autorité" redondantes. On a donc cherché à réaliser un moyen de commande électrique d'ouverture et de fermeture du circuit carburant avec une sûreté de fonctionnement comparable à celle d'une commande mécanique.

Une telle commande mécanique est utilisée dans le dispositif décrit dans le brevet français 2 180 483. Le carburant des réservoirs est envoyé par une pompe basse pression à l'entrée d'une pompe haute pression qui alimente les injecteurs de la chambre de combustion du moteur par l'intermédiaire d'organes de contrôle et de régulation. Le carburant sous pression passe dans un doseur de débit commandé par la manette pilote et qui alimente d'une part les injecteurs de démarrage et d'autre part un dispositif à clapets qui n'autorise le passage du carburant aux injecteurs principaux de la chambre de combustion que lorsque celle-ci est complètement allumée. Ce dispositif assure également la purge des injecteurs lors de l'arrêt du réacteur. Un détecteur de différence de pression, monté entre l'entrée et la sortie du doseur, agit sur une soupape régulatrice qui limite le débit de carburant envoyé au doseur en court-circuitant vers l'entrée de la pompe haute pression une partie du carburant. La commande mécanique de dispositif à clapets est réalisée par une vanne à trois voies actionnée par le pilote. Dans la phase de démarrage, on positionne la vanne de manière que du carburant soit envoyé par la pompe haute pression dans le circuit de commande du dispositif à clapets pour agir sur un clapet secondaire contre l'action d'un ressort qui maintient le clapet principal (alimentant les injecteurs principaux) fermé, tant que la pompe n'a pas atteint son régime.

Pour arrêter le réacteur, la vanne trois voies est tournée de manière à envoyer le carburant de commande du dispositif à clapets, provenant de la pompe, directement à l'entrée de celle-ci.

L'invention a pour objet un système de commande permettant de supprimer la vanne trois voies à commande manuelle commandant l'ouverture et la fermeture du dispositif à clapets et de la remplacer par un ensemble de deux dispositifs, un premier dispositif à électrovanne redondant commandant directement le détecteur de différence de pression et un second dispositif à électrovanne de secours, agissant directement sur la commande de la soupape régulatrice en dérivant son fluide de commande vers un réservoir à la pression avion, susceptible d'être actionée en cas de défaillance du premier dispositif.

Le système de commande selon l'invention est remarquable en ce qu'il comprend un premier dispositif à électrovanne disposé entre le doseur de débit et le détecteur de différence de pression et un deuxième dispositif à électrovanne prévu sur un circuit de commande de la soupape régulatrice.

Le premier dispositif à électrovanne est constitué de deux chaînes normales, identiques, comportant chacune une alimentation électrique indépendante, un commutateur de commande double à deux positions, des circuits de commande et de traitement de signaux d'un calculateur de marche du moteur, une électrovanne ; le deuxième dispositif à électrovanne est une chaîne secours coupe-feu et comporte une alimentation électrique indépendante, un commutateur de commande à deux positions, une électrovanne.

Les explications et figures données ci-après à titre d'exemple permettront de comprendre comment l'invention peut être réalisée.

La figure 1 représente un schéma synoptique d'un système connu d'alimentation en carburant d'un réacteur.

La figure 2 représente un schéma synoptique du système d'alimentation selon l'invention.

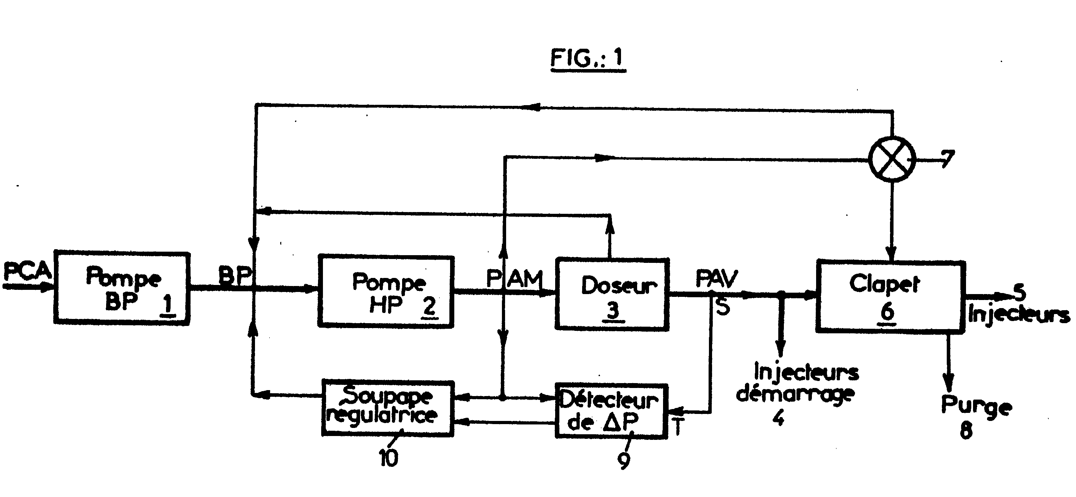

Le schéma synoptique de la figure 1 représente le système d'alimentation en carburant de la chambre de combustion d'un réacteur, selon l'art antérieur. Le carburant, à la pression avion PCA, est pompé par la pompe basse pression 1 et envoyé à l'entrée d'une pompe haute pression 2 d'où il sort à la pression PAM pour entrer dans le doseur de débit 3. La commande de régime, non figurée, règle le débit du doseur d'où le carburant sort à la pression PAV avant d'alimenter soit directement les injecteurs de démarrage 4, soit les injecteurs principaux 5 par l'intermédiaire du dispositif à clapet 6. Des moyens mécaniques constitués par une vanne trois voies 7 permettent au pilote d'agir manuellement sur la mise en ou hors service du clapet de manière à permettre l'alimentation ou l'arrêt des injecteurs principaux 5 de la chambre de combustion et la purge des injecteurs par le circuit 8 lors de l'arrêt.

Un détecteur de différence de pression 9 compare les pressions amont PAM et aval PAV du carburant traversant le doseur et commande une soupape régulatrice 10 qui assure la régulation du débit de la pompe haute pression 2. Le fonctionnement de ce système a été précédemment décrit dans l'analyse du brevet français 2 180 483.

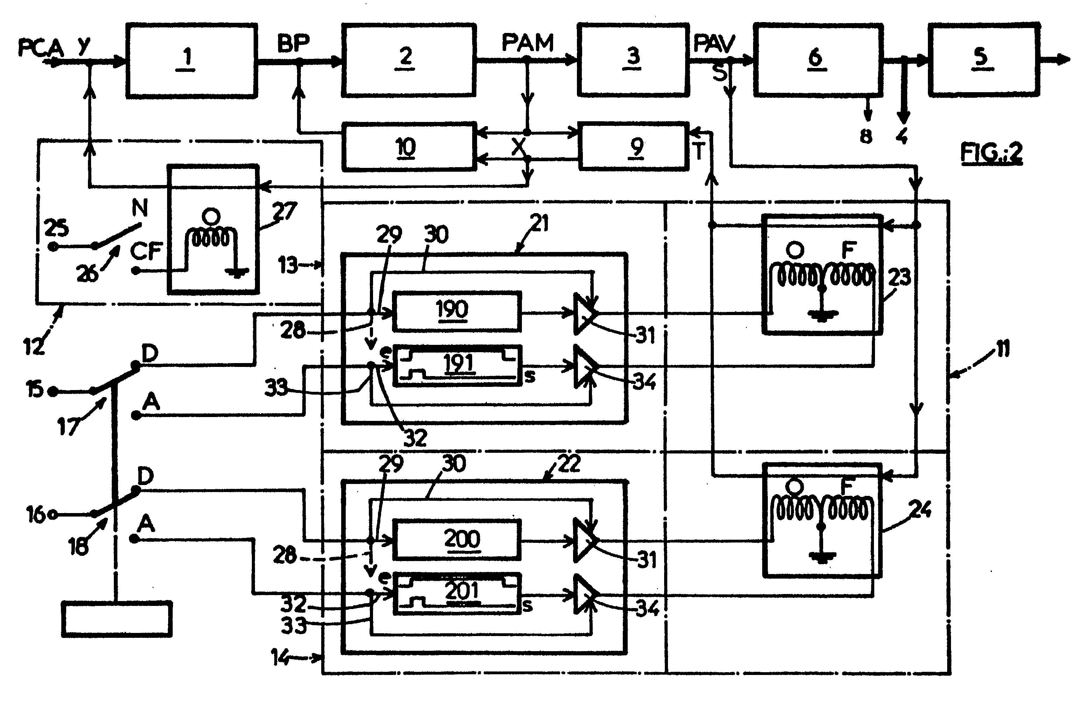

Dans le système, selon l'invention, représenté figure 2, le dispositif à clapet à commande manuelle 7 a été supprimé et remplacé par un moins un dispositif à électrovanne 11, qui sera décrit ultérieurement, placé entre la sortie du doseur de débit 3 et le détecteur de différence de pression 9.

Un deuxième dispositif à électrovanne 12, dit "secours coupe-feu", est prévu sur le circuit de commande de la soupape régulatrice 10. Ces deux dispositifs permettent le court-circuitage de la pompe haute pression, lequel entraîne la fermeture du clapet d'arrêt.

Les dispositifs 11 et 12 qui remplacent le dispositif manuel du système connu comprennent :

- pour le premier dispositif 11, deux chaînes normales 13, 14 identiques comportant chacune une alimentation électrique 15, 16 indépendante, un commutateur de commande double 17, 18 à deux positions "Démarrage" D et "Arrêt" A, des circuits de commande 190, 200 et de traitement de signaux 191, 201 d'un calculateur de marche de moteur 21, 22, une électrovanne 23, 24 ;

- pour le deuxième dispositif 12 "Secours coupe-feu" : une alimentation électrique indépendante 25, un commutateur de commande à deux positions 26 "normal" N et "Coupe-feu" CF, une électrovanne 27.

Eventuellement, selon l'exemple de réalisation proposé les trois alimentations électriques 15, 16, 25 sont diversifiées sur l'avion pour éviter tout risque de panne commune.

Les électrovannes 23, 24 des chaînes normales 13, 14 ont leurs circuits hydrauliques montés en parallèle sur le circuit ST reliant la sortie du doseur de débit 3 au détecteur de différence de pression 9. En coupant ce circuit, on trompe le détecteur 9 en lui indiquant une pression de sortie du doseur trop faible, ce qui se traduit au niveau du détecteur par une différence de pression trop forte.

Il envoie alors à la soupape régulatrice 10 l'ordre de renvoyer à l'entrée de la pompe haute pression 2, la totalité du carburant qui en sort. Le clapet 6, ne recevant plus de carburant sous pression, se ferme et isole le circuit carburant des injecteurs principaux 5 de la chambre de combustion et commande la purge du circuit.

L'électrovanne 27 de la chaîne "Secours coupe-feu" 12 est disposée dans un circuit de carburant XY monté en dérivation entre le circuit de commande de la soupape régulatrice 10 et l'entrée de la pompe basse pression 1 qui est à la pression avion PCA. La chaîne "Secours coupe-feu" n'est utilisée que lorsque le premier dispositif 11, constitué des deux chaînes normales 13, 14, n'a pas fonctionné lors de la mise des commutateurs 17, 18 sur la position "Arrêt". En mettant en fonction la dérivation XY, on donne directement à la soupape régulatrice 10 l'ordre de renvoyer à l'entrée de la pompe haute pression 2 la totalité du carburant qui en sort.

Selon un mode de réalisation préféré, les électrovannes 23, 24 des chaînes normales sont du type bi-stable à deux bobines de commande. Le noyau mobile est retenu dans les deux positions extrêmes de sa course par deux aimants. Une première bobine O permet, quand elle est excitée, de faire passer le noyau mobile de la position "Fermé" à la position "Ouvert". Inversement une deuxième bobine F permet, quand elle est excitée, de faire passer le noyau mobile de la position "Ouvert" à la position "Fermé". En l'absence d'excitation électrique ou en présence de deux excitations contradictoires, la position du noyau reste ce qu'elle est. Les bobines peuvent être commandées en continu ou en impulsion.

Les calculateurs 21, 22 sont identiques et leur technologie peut être analogique ou numérique. Ils sont mis en marche ou arrêtés par les mêmes commutateurs 17, 18 couplés que les chaînes de commande des électrovannes 23, 24.

Chaque chaîne 13, 14 se partage en deux voies "Démarrage" D et "Arrêt" A en traversant le commutateur 17, 18.

La voie "Démarrage" D se partage à son tour en trois lignes à son entrée dans le circuit de commande 190, 200 du calculateur 21, 22 :

- une ligne de séquencement général 28 permettant la mise en route du démarreur du réacteur et de l'alimentation électrique des divers organes de contrôle ;

- une ligne de transmission de signal 29 à l'amplificateur 31 d'ouverture de l'électrovanne 23, 24, qui permet au calculateur de temporiser le signal selon le séquencement ou la logique prévu pour le démarrage du réacteur ;

- une ligne de confirmation du signal 30 qui autorise le fonctionnement de l'amplificateur 31 d'ouverture de l'électrovanne 23, 24 et par conséquent l'alimentation de la bobine O.

La voie "Arrêt" A se partage en deux lignes à son entrée dans un circuit de traitement de signaux 191, 201 du calculateur 21, 22 :

- une ligne de transmission du signal 32 à l'amplificateur 34 de fermeture de l'électrovanne 23, 24 qui permet, par exemple, de transformer un signal d'entrée de type continu en un signal de sortie de type impulsionnel comme représenté dans le schéma du circuit 191, 201 ;

- une ligne de confirmation du signal 33 qui autorise le fonctionnement de l'amplificateur 34 de fermeture de l'électrovanne et par conséquent l'alimentation de la bobine F.

La mise en forme impulsionnelle du signal, telle que décrite ci-dessus pour la voie "Arrêt" A, permet d'éviter un échauffement exagéré des bobines commandées et peut être appliquée également à la voie "Démarrage" D. Cette mise en forme est facultative.

Toujours d'après le mode de réalisation préféré, l'électrovanne "Coup-feu" 27 est monostable du type "excitée : ouvert", commandée au moyen d'un commutateur 24 à deux positions "Normal" N et "Coupe-feu" CF à une seule voie.

Le mode de fonctionnement du système selon l'invention et plus particulièrement du premier dispositif 11 comprenant les chaînes normales 13, 14 est le suivant : le moteur étant à l'arrêt, le commutateur double 17, 18 est en position "Arrêt" A et le circuit ST sortie du doseur 3-détecteur de différence de pression 9 est coupé.

Le deuxième dispositif 12 "Secours-coup-feu" est en position "Normal" N et le circuit de dérivation XY est coupé.

La mise en position "Démarrage" D du commutateur double 17, 18 coupe l'alimentation électrique sur les voies "Arrêt" de commande de fermeture des électrovannes 23, 24, lance le séquencement général de démarrage du moteur sur les deux chaînes (alimentation du démarreur, allumage des injecteurs de démarrage, etc...), fournit la puissance électrique nécessaire au fonctionnement des amplificateurs d'ouverture 31 des électrovannes 23 et 24. Le moteur démarre.

Lorsque le moteur a atteint le régime prévu, les injecteurs de démarrage sont coupés, tandis que les injecteurs sont alimentés.

La mise en position "Arrêt" A du commutateur double 17, 18 coupe l'alimentation électrique sur les voies "Démarrage" D de commande d'ouverture des électrovannes 23 et 24 et plus particulièrement sur les bobines O, fournit un signal de fermeture sur les deux voies "Arrêt" A de commande de fermeture des deux électrovannes, et fournit la puissance électrique nécessaire au fonctionnement des amplificateurs 34 de fermeture des électrovannes 23, 24.

Les deux électrovannes se ferment et le circuit ST est coupé produisant la fermeture du clapet 6 et la purge du circuit injecteur 5. Le moteur s'arrête.

Si l'arrêt n'est pas obtenu, le pilote a la possibilité de mettre le commutateur 26 de secours en position "coupe-feu" CF pour établir la dérivation XY et obtenir l'arrêt du moteur en agissant au niveau de la commande de la soupape régulatrice 10.

Les avantages que présente le système de commande électrique selon l'invention sont les suivants:
- la sûreté de commande obtenue par les lignes de confirmation des commandes d'ouverture et de fermeture des électrovannes garantissant la réalité de l'ordre donné ;
- la sûreté d'exécution garantissant que l'ordre donné a été exécuté à l'ouverture par redondance des deux chaînes 13, 14 portant à la fois sur les calculateurs 21, 22 et sur les électrovannes 23, 24. L'intervention ne se fait pas directement sur le circuit principal du carburant mais sur un circuit dérivé ST sur lequel on place les deux électrovannes en parallèle. Ce circuit dérivé, à faible débit puisque c'est un circuit de contrôle de pression à la sortie du doseur, permet d'utiliser des électrovannes de faibles dimensions et de faible consommation électrique et faciles à protéger ;
- la sûreté de fermeture, qui est affaiblie par la mise en parallèle des électrovannes 23, 24 est par contre renforcée par l'adjonction de l'électrovanne coupe-feu 27 placée sur un circuit dérivé à faible débit ;
- la sûreté de maintien est assurée par les électrovannes bistables qui garantissent que l'ordre donné et exécuté est maintenu jusqu'à l'arrivée de l'ordre contraire.

La sûreté de l'ensemble est supérieure à celle d'un clapet d'arrêt à commande mécanique. Le système s'intègre plus facilement dans la conception des avions modernes dans lesquels la plupart des commandes mécaniques sont supprimées et remplacées par des commandes électriques.

**Revendications**

1. Système de commande électrique du circuit de carburant d'un moteur à turbine, ledit circuit comportant en série une pompe basse pression pour amener le carburant des réservoirs à une pompe haute pression qui alimente un doseur de débit, un clapet d'alimentation des injecteurs, et en parallèle avec le doseur de débit, un détecteur de différence de pression, entre l'entrée et la sortie du doseur, commandant une soupape régulatrice montée à la sortie de la pompe haute pression pour dériver tout ou partie du carburant vers l'entrée de ladite pompe, caractérisé en ce que le système comprend un premier dispositif à électrovanne (11) disposé entre la sortie du doseur de débit (3) et le détecteur de différence de pression (9) et un deuxième dispositif à électrovanne (12) prévu sur un circuit de commande de la soupape régulatrice (10).

2. Système selon la revendication 1, caractérisé en ce que le premier dispositif à électrovanne (11) est constitué de deux chaînes normales (13, 14) identiques comportant chacune une alimentation électrique (15, 16) indépendante, un commutateur de commande double (17, 18) à deux positions, des circuits de commande (190, 200) et de traitement de signaux (191, 201) d'un calculateur de marche du moteur (21, 22), une électrovanne (23, 24) ; le deuxième dispositif à électrovanne (12) est une chaîne secours coupe-feu et comporte une alimentation électrique (25), indépendante, un commutateur de commande à deux positions (26), une électrovanne (27).

3. Système selon la revendication 2, caractérisé en ce que les électrovannes (23, 24) des deux chaînes (13, 14) ont des circuits hydrauliques montés en parallèle, ledit ensemble parallèle étant placé dans le circuit reliant la sortie du doseur de débit (3) au détecteur de différence de pression (9).

4. Système selon la revendication 2 ou 3, caractérisé en ce que les électrovannes (23, 24) des chaînes (13, 14) sont du type bi-stable à deux bobines de commande.

5. Système selon la revendication 2, caractérisé en ce que chaque chaîne normale (13, 14) se partage en deux voies "Démarrage" (D) et "Arrêt" (A) en traversant le commutateur (17, 18) :
- la voie "Démarrage" (D) se partage en trois lignes (28, 29, 30) à son entrée dans le circuit de commande (190, 200) du calculateur (21, 22) ; une ligne de séquencement général (28) assurant la mise en route du démarreur et de l'alimentation électrique des divers organes de contrôle ; une ligne de transmission de signal (29) à un amplificateur (31) d'ouverture de l'électrovanne (23, 24) permettant la temporisation du signal selon le séquencement prévu pour le démarrage du réacteur ; une ligne de confirmation du signal (30) autorisant le fonctionnement de l'amplificateur (31) d'ouverture de l'électrovanne (23, 24);
- la voie "Arrêt" (A) se partage en deux lignes à son entrée dans le circuit de traitement de signaux (191, 201) : une ligne de transmission de signal (32) à un amplificateur (34) de fermeture de l'électrovanne (23, 24), une ligne de confirmation du signal (33) qui autorise le fonctionnement de l'amplificateur (34) de fermeture de l'électrovanne (23, 24).

6. Système selon la revendication 2, caractérisé en ce que l'électrovanne (27) du deuxième dispositif (12) est du type monostable "excité-ouvert" comman-

dée par un commutateur (26) à deux positions à une seule voie.

**Patentansprüche**

1. Elektrische Steuereinrichtung zur Steuerung der Kraftstoffversorgung eines Turbinenmotors, mit einer Reihenanordnung, bestehend aus
   - einer Niederdruckpumpe zur Zuführung des Kraftstoffs von den Vorratsbehältern zu einer einen Durchsatzdosierer speisenden Hochdruckpumpe und
   - einem Ventil zur Speisung der Einspritzdüsen, sowie mit einem parallel zu dem Durchsatzdosierer zwischen dessen Eingang und Ausgang angeordneten Druckdifferenzdetektor zur Steuerung eines am Ausgang der Hochdruckpumpe angeordneten Regelventils zur Umleitung des ganzen oder eines Teils des Kraftstoffs zum Eingang der Hochdruckpumpe, dadurch gekennzeichnet, daß die Einrichtung eine erste Elektroventilanordnung (11) aufweist, die zwischen dem Ausgang des Durchsatzdosierers (3) und dem Druckdifferenzdetektor (9) angeordnet ist, sowie eine zweite Elektroventilanordnung (12), die in einem Kreis zur Steuerung des Regelventils (10) angeordnet ist.

2. Einrichtung nach Anspruch 1, dadurch gekennzeichnet, daß die erste Elektroventilanordnung (11) aus zwei identisch ausgebildeten normalen Kanalanordnungen (13, 14) besteht mit jeweils einer unabhängigen elektrischen Speisung (15, 16), einem Doppelsteuerschalter (17, 18) mit zwei Stellungen, Schaltungen zur Steuerung (190, 200) und Verarbeitung (191, 201) von Signalen eines Motorbetriebsrechners (21, 22) und einem Elektroventil (23, 24), und daß die zweite Elektroventilanordnung (12) eine Brandschutz-Kanalanordnung ist und eine unabhängige elektrische Speisung (25), einen Steuerschalter (26) mit zwei Stellungen und ein Elektroventil (27) umfaßt.

3. Einrichtung nach Anspruch 2, dadurch gekennzeichnet, daß die Elektroventile (23, 24) der beiden normalen Kanalanordnungen (13, 14) hydraulische Kreise besitzen, die parallel angeordnet sind, und daß diese Parallelanordnung in demjenigen hydraulischen Kreis angeordnet ist, der den Ausgang des Durchsatzdosierers (3) mit dem Druckdifferenzdetektor (9) verbindet.

4. Einrichtung nach Anspruch 2 oder 3, dadurch gekennzeichnet, daß die Elektroventile (23, 24) der normalen Kanalanordnungen (13, 14) bistabil sind und zwei Steuerspulen haben.

5. Einrichtung nach Anspruch 2, dadurch gekennzeichnet, daß jede normale Kanalanordnung (13, 14) über den jeweiligen Steuerschalter (17, 18) in einen Zweig "Anlassen" (D) und einen Zweig "Halten" (A) aufgeteilt ist:
   - wobei der Zweig "Anlassen" (D) sich bei seinem Eintritt in die Steuerschaltung (190, 200) des Rechners (21, 22) in drei Leitungen (28, 29, 30) aufteilt, nämlich eine Leitung (28) für die allgemeine Ablauffolge, die das Hochfahren des Anlassers und die elektrische Speisung der verschiedenen Steuerorgane gewährleistet, eine Leitung (29) für die Signalübertragung zu einem Verstärker (31) zum Öffnen des Elektroventils (23, 24), der die Verzögerung des Signals entsprechend der für das Anlassen des Triebwerks vorgesehenen Abfolge ermöglicht, und eine Leitung (30) für die Signalbestätigung, die den Betrieb des Verstärkers (31) zum Öffnen des Elektroventils (23, 24) ermöglicht,
   - und wobei der Zweig "Anhalten" (A) sich bei seinem Eintritt in die Schaltung (191, 201) zur Signalverarbeitung in zwei Leitungen (32, 33) aufteilt, nämlich eine Leitung (32) für die Signalübertragung zu einem Verstärker (34) zum Schließen des Elektroventils (23, 24) und eine Leitung (33) für die Signalbestätigung, die den Betrieb des Verstärkers (34) zum Schließen des Elektroventils (23, 24) ermöglicht.

6. Einrichtung nach Anspruch 2, dadurch gekennzeichnet, daß das Elektroventil (27) der zweiten Elektroventilanordnung (12) ein bei nur Erregung geöffnetes monostabiles Ventil ist, das von einem Schalter (26) mit zwei Stellungen und einer einzigen Schaltstrecke gesteuert wird.

**Claims**

1. A system of electrical control of the fuel circuit of a gas turbine engine, the said circuit comprising, in series, a low pressure pump to supply the fuel from the tanks to a high pressure pump which feeds a flow meter, a flap valve supplying the injectors and, in parallel with the flow meter, a pressure differential sensor, to measure the difference in pressure between the inlet and the outlet of the flow meter, controlling a regulating valve fitted to the outlet of the high pressure pump to divert all or part of the fuel to the inlet of the said pump, characterised in that the system comprises a first solenoid valve device (11) placed between the outlet of the flow meter (3) and the pressure differential sensor (9) and a second solenoid valve device (12) fitted to a control circuit for the regulating valve (10).

2. A system in accordance with Claim 1, characterised in that the first solenoid valve device (11) is constituted by two identical normal circuits (13, 14) each one having its own independent electrical supply (15, 16), a two-position double switch, control circuits (190, 200) and signal processing circuits (191, 201), an engine output calculator (21, 22), a solenoid valve (23, 24); the second solenoid valve device (12) is an emergency fuel cut-off circuit and comprises an independent electrical supply (25), a two-position switch (26), and a solenoid valve (27).

3. A system in accordance with Claim 2, characterised in that the solenoid valves (23, 24) of the two circuits (13, 14) are fitted with hydraulic circuits mounted in parallel, the said parallel assembly being situated in the circuit connecting the outlet of the flow meter (3) to the pressure differential sensor (9).

4. A system in accordance with Claims 3 or 4, characterised in that the solenoid valves (23, 24) of the circuits (13, 14) are of the bistable type with two coils.

5. A system in accordance with Claim 2, characterised in that each of the normal circuits (13, 14) is split into two channels "Start" (D) and "Stop" (A) when passing through the switches (17, 18):

— the "Start" channel (D) divides into three lines (28, 29, 30) at its entry into the control circuit (190, 200) of the calculator (21, 22); a general sequencing line ensuring the operation of the starter and providing the electrical supply to the various control organs; a signal transmission line (29) to an amplifier (31) for opening the solenoid valve (23, 24), allowing a time delay to be imposed on the signal in accordance with the sequence provided for starting the engine; a line confirming the signal (30) which enables the amplifier (31) which then opens the solenoid valve (23, 24);

— the "Stop" channel (A) splits into two lines at its entry into the signal processing circuit (191, 201), a signal transmission line (32) to an amplifier (34) for closing the solenoid valve (23, 24), a line confirming the signal (33) which enables the amplifier (34) which then closes the solenoid valve (23, 24).

6. A system in accordance with Claim 2, characterised in that the solenoid valve (27) of the second device (12) is of the monostable, "energised open" type, controlled by a single channel two-position switch (26).

FIG.:1

PCA

Pompe BP 1

BP

Pompe HP 2

Soupape régulatrice 10

P/AM

Doseur 3

Détecteur de ΔP 9

PAV

Injecteurs démarrage 4

Clapet 6

Injecteurs 5

Purge 8

7

S

T

FIG.2